# EUROPEAN PATENT SPECIFICATION

(11) **EP 2 176 107 B1**
(45) Date of publication and mention of the grant of the patent: **16.11.2011**
(21) Application number: 08776087.2
(22) Date of filing: 30.07.2008
(51) Int. Cl.: B60T 17/22

(54) **FLUID RESERVOIR CAP**
FLUIDBEHÄLTERVERSCHLUSS
BOUCHON DE RÉSERVOIR POUR FLUIDE

(30) Priority: 01.08.2007 GB 0715345
(43) Date of publication of application: 21.04.2010
(73) Proprietor: Alba Diagnostics Limited, Fife KY7 6JG (GB)
(72) Inventor: WHITTON, Stewart, Fife KY7 6JG (GB); RENILSON, Ian, Fife KY11 9LU (GB)
(74) Representative: Newell, Campbell
(86) International application number: PCT/GB2008/002589
(87) International publication number: WO 2009/016364

(56) References cited:
- CA-A1- 2 098 251
- US-A- 5 964 326
- US-B1- 6 298 961

## Description

The present invention relates to a universal cap device, suitable for use in the temporary capping of reservoir vessels, such as are used to provide a reservoir of fluid in an hydraulic system e.g. in a vehicle brake system. In particular the invention concerns a universal cap device for use in the temporary capping of reservoir vessels of hydraulic systems, during operations to replace or bleed the hydraulic fluid. The invention also has applications in cooling system testers and also with vacuum brake bleeding.

Hydraulic systems such as those employed in the operation of brake or power steering mechanisms of motor vehicles require regular maintenance, for safe and effective operation. Such systems have a network of pipes containing a suitable fluid for the hydraulic transmission of power. The hydraulic system includes a reservoir vessel containing a supply of fluid that connects to the pipes. The supply of fluid in the reservoir vessel ensures that the system remains full of fluid in all normal operating conditions.

Maintenance requirements include the complete replacement of the hydraulic fluid at periodic intervals, as its performance deteriorates over time. This is particularly the situation for brake fluid. In addition, bleeding operations are carried out to remove bubbles of air or other gases from the hydraulic fluid. Bubbles of gas present in the hydraulic fluid are readily compressed, causing a loss of effective power transmission.

In a preferred method of fluid replacement or bleeding a bleed nipple at one end of the hydraulic system distal from the reservoir vessel is opened. At the same time fresh fluid is supplied, under pressure, to the reservoir vessel via its inlet. As fresh fluid flows into the system via the reservoir vessel old fluid, containing any gas bubbles present, is removed via the bleed nipple. Thus the fluid can be partially or fully replaced as required and air or other gas bubbles or contaminants removed to ensure optimum performance. Alternatively vacuum brake bleeding may be used whereby brake fluid is sucked out of a bleed nipple into a vessel to which a sealed cap is fitted.

To supply pressurized fluid to the reservoir vessel the cap that normally seals its inlet is removed and replaced with a temporary cap. The temporary cap has a passage therethrough for supply of the pressurized fluid. The temporary cap must seal to the inlet of the reservoir vessel to avoid ingress of air, which would lead to the introduction of air bubbles into the fluid. To ensure a good seal to the inlet of the fluid reservoir the temporary cap should be of the same size and closure type (e.g. screw thread)as the normal inlet cap.

However a very large number of sizes of fluid reservoir inlets, with differing closure methods, are employed in motor vehicles. This makes it difficult for a maintenance garage to hold a stock of all of the temporary caps required for maintenance of all of the vehicle types that may be encountered. For this reason universal cap devices have been developed which clamp a seal element to a fluid reservoir inlet during maintenance. The seal element is sized and formed to fit a wide range of inlet diameters. The known devices suffer from a number of disadvantages, in particular they can be difficult to fit securely and reliably to a fluid reservoir inlet, especially in the often confined space of a vehicle engine compartment. Any loss of the integrity of the sealing contact between the seal element and the reservoir fluid inlet will result in a failure to correctly replace or bleed the hydraulic fluid.

It is also known to test vehicle cooling systems for leaks by applying pressure to the cooling system, usually through the inlet to the cooling system. Again there are very many different arrangement of inlets to vehicle cooling systems and thus there is a requirement for a universal cap that can be used by a technician/mechanic across the range of different inlets whilst still enabling effective sealing.

The document CA 2098251 A1 describes a state of the art bleeding device.

It is an object of the present invention to provide an improved universal cap device for a reservoir vessel that avoids or at least minimizes at least one of the abovementioned disadvantages.

The present invention provides a universal cap device for a reservoir vessel, which vessel has a neck portion with a distal end portion defining an inlet opening having a diameter within a predetermined range of different diameters, said cap device providing in use thereof, a temporary capping of said inlet opening and comprising:
a clamp device having opposed, first and second, jaws, for clamping engagement with a said neck portion, said jaws being mounted on at least one beam, at least one of said jaws being movable relative to the other along said at least one beam, said at least one beam mounting a carriage movable along said beam; said carriage mounting a cap element support, which supports a downwardly projecting cap element, via a drive device for controlled downward displacement of said cap element into sealing engagement with said inlet opening in use of the cap device, said cap element having a sealing surface formed and arranged so that said cap element can sealingly engage the inlet openings of various different reservoirs with different sizes of inlet opening.

A wide variety of clamping mechanisms are known in the art. On the one hand there may be used a drive device such as a screw device for controlled movement of said at least one movable jaw, or a ratchet advance drive, which can also retain the moveable jaw once it has been moved into a clamping position. On the other hand there may used a movable jaw which is substantially freely slideable on said at least one beam, and is then retained in a clamping position by a locking device, for example a screw or cam lock device. A preferred form of quick release locking device comprises a lever which is biased to grip the said at least one beam by the action of a resilient biasing member. Moving the lever against the action of the biasing member releases the grip (lock) allowing the clamp jaw to be moved to a new position as required. Of course such a locking device could also be used in combination with a drive device as described above, if desired.

It will be appreciated that various forms of sealing surface geometry may be used. Thus for example there may be used a substantially flat sealing surface which engages the end face of the inlet opening. There may also be used a sealing surface with a male cross-sectional profile of progressively increasing diameter, for example a conical, frustoconical or convex profile, whereby the sealing surface engages the inner edge of the inlet opening. There may also be used a sealing surface with a female cross-sectional profile of progressively increasing diameter, for example a conical or concave profile, whereby the sealing surface engages the outer edge of the inlet opening. Conical profiles have the advantage of providing at least a degree of self-centering when the cap element is being driven into sealing engagement with the inlet opening. As the conical sealing surface contacts the edge of the fluid reservoir inlet, on operation of the drive device, the cap element will tend to move along the beam to centre the conical shape in the inlet. A conical shaped sealing surface has the further benefit of being able to form a sealing contact with a circular inlet of any size up to the diameter of the cone.

The cap element may be impermeable in order to close off the opening, or may be provided with at least one passage therethrough which may be connected to a conduit for fluid communication between the vessel and the exterior - for example, to a fluid supply. This allows the introduction of a supply of fluid to the reservoir, under pressure as desired during a fluid replacement or bleeding operation of a fluid system, which is fed by the fluid reservoir.

The clamp device provides a convenient way to operate means of securing the universal cap device to a fluid reservoir.

When clamped in place, the said at least one beam of the clamp device is secured in a fixed relationship with respect to the inlet opening, the filler orifice, of the fluid reservoir. Simply moving the carriage along the beam until the cap element is above the orifice and then operating the drive device to move the cap element downwards into sealing engagement provides a good leak proof join with the cap element fixed in position. Pressurised fluid can then be supplied to the fluid reservoir, from a suitable supply, via the passage through the cap element, during a bleeding or fluid replacement operation.

Preferably the cap element has a resilient sealing surface. Most preferably the cap element has a resilient conical sealing surface. For example the cap element may have a conical sealing surface of a synthetic rubber type material, compatible with the fluids to be passed through the cap element. A cap element with a resilient surface provides a more secure sealing engagement to the inlet of the fluid reservoir.

The drive device may take different forms, provided it serves the function of moving the cap element into good sealing contact with a fluid reservoir inlet. Preferably the drive device comprises a screw passing through a threaded hole formed in a nut attached to the carriage of the cap element unit, with the cap element attached to the end of the screw distal from the carriage. When the universal cap device is clamped in place for use, turning the screw in one direction, either by simply turning the cap element or by operating a handle attached to the top of the screw, moves the cap element downwards away from the beam to seal onto a reservoir inlet. Turning the screw in the opposite direction releases the sealing contact.

The carriage which mounts the cap element support, cap element and drive device, moves along the beam of the clamp device. Advantageously the beam passes through the body of the carriage, securing the carriage to the beam. The carriage may simply slide along the beam to locate the cap element in position for driving into sealing engagement with the reservoir inlet. Alternatively it may be provided with rollers or wheels which engage with the beam for smoother movement. If desired the carriage may be supplied with a locking means to lock it to the beam of the clamp device at a selected position.

The cap element has a passage therethrough for supplying the pressurised fluid to a fluid reservoir. Preferably the passage passes through the centre of the cap element. Preferably where the drive device is a screw and nut arrangement, the passage passes through the centre of the cap element and also through the centre of the screw (i.e. the passage continues from the cap element as a longitudinal bore of the screw). This allows convenient attachment of a supply of pressurised fluid at the top of the screw. Advantageously the screw is fitted with a quick release hose coupling, or a short length of hose with a quick release coupling, for joining to a fluid supply at the end distal from the cap element.

The clamp device has first and second jaws, at least one of which is moveable along the at least one beam. Preferably the clamp device has one jaw that is fixed at one end of the beam and the second jaw is moveable along the beam. This arrangement has the advantage of simplifying the clamping of the cap device to a reservoir inlet. The fixed first jaw can be held in position against the neck portion of the reservoir vessel and the second jaw is then moved along the beam into a clamping position. This simple method is particularly useful in the often cramped location of reservoir vessels. For example, brake fluid reservoirs sited in the engine compartment of a motor vehicle.

The clamp device has at least one elongate beam to which the clamp jaws and the carriage attach. The beam or beams of the clamp device may be of any suitably rigid and strong material, typically a metal. The elongate beams may take any form. For example the beams may be rods or tubes of circular or other cross-section or they may take the form of rectangular beams. Preferably the clamp device comprises two spaced apart and parallel beams. Preferably the first clamp jaw is fixed at one end of both of the beams and the second (moveable) clamp jaw is also mounted to both beams. Preferably the two beams pass through the body of the second clamp jaw. This arrangement gives a unit that is resistant to twisting or torsional forces when clamping forces are applied in use. Preferably, where two parallel beams are employed, both beams pass through the carriage which mounts the cap element. Advantageously where this arrangement is employed, the drive device takes the form of a screw passing through the carriage and passes centrally between the two beams and at right angles to them.

The opposed first and second clamp jaws clamp to opposed sides of the neck portion of a reservoir inlet (filler pipe) in use of a cap device of the invention. They may be formed in different ways to achieve this. Generally each clamp jaw will have a reservoir neck engagement portion formed to clamp securely to a range of different types and diameters of filler pipes, including those with 'tags' e.g. bayonet fittings or other projections which engage with the filler cap normally fitted to the reservoir inlet. Each clamp jaw may have, as a reservoir neck engagement portion, for example, a projection formed to engage with the exterior surface of reservoir neck portions. The projections on each clamp jaw engage opposed exterior surfaces of the reservoir neck portion. The projections may be shaped to engage more or less closely with the curvature of reservoir necks of typical diameters. Preferably each clamp jaw reservoir neck engagement portion has a pair of projections, with each projection in a pair being in a side-by-side spaced apart relationship. Each pair of projections (prongs) engage with the exterior surface of a reservoir neck, in use. The pair of prongs on each clamp jaw ensures that when clamping to a reservoir neck portion, each clamp jaw contacts the exterior of the neck at, at least two points (the end of each 'prong'). This gives a secure fixing of the clamp device to fluid reservoir neck portions of a wide variety of diameters or shapes.

Further preferred features and advantages of the present invention will appear from the following detailed description given by way of example of some preferred embodiments illustrated with reference to the accompanying drawings in which;
Figs 1 (a to c) show a universal cap device of the invention, in use on an inlet of a reservoir vessel, in perspective view, front elevation and sectional front elevation respectively; and
Fig 2 shows the same universal cap device in use on a differently sized inlet.

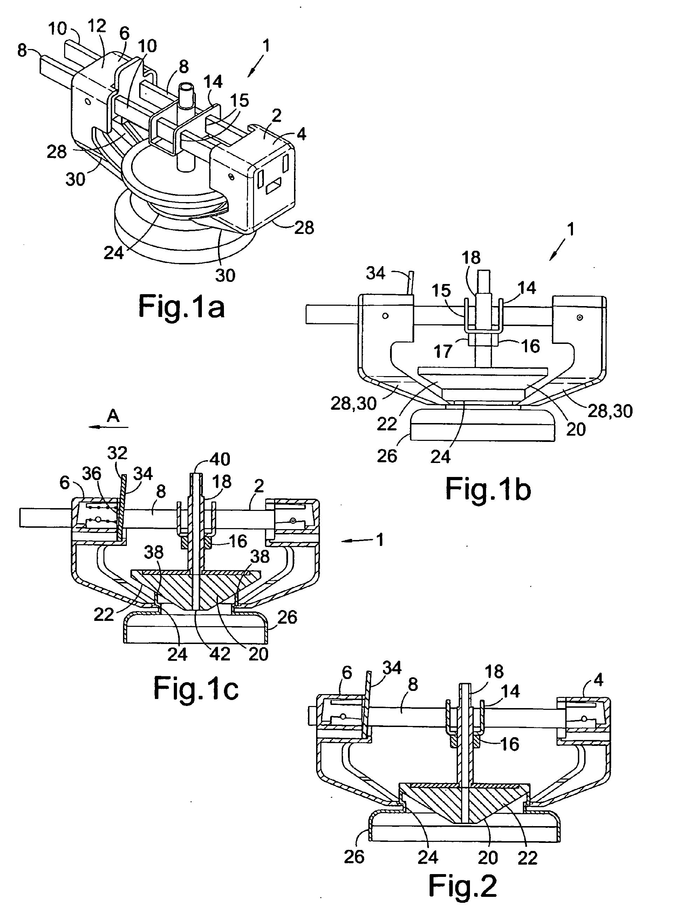

Fig 1a shows in perspective view a universal cap device 1 of the invention. The cap device 1 has a clamp device 2 which has first 4 and second 6 clamp jaws mounted on a pair of parallel spaced apart beams 8,10. The first clamp jaw 4 is fixed at one end of the beams 8, 10 and the second clamp jaw 6 is moveable along the beams 8,10 which pass through the body 12 of the second clamp jaw 6. A carriage 14 is mounted for sliding movement on both of the beams 8,10 which pass through slots 15 in its body.

As shown in the front elevation view of figure 1b a cap element support 16, in this example a conventional hexagonal nut 17 welded to the carriage 14, supports a rod 18 which has an external screw thread (not shown for clarity) which passes through the nut and between the parallel beams 8, 10. The threaded rod 18 and nut 17 is a drive device to which a downwardly projecting cap element 20 is attached. The cap element 20 has a conical sealing surface 22.

The cap device 1 is shown clamped onto the neck 24 of the inlet of a fluid reservoir 26 (only the top portion shown for clarity). Referring back to Figure 1a, both first 4 and second 6 clamp jaws are shown gripping opposed sides of the neck 24 of the reservoir 26, by means of two inwardly facing projections 28, 30 which constitute reservoir neck engagement portions of each of the clamp jaws 4, 6.

Referring now to the cross sectional front elevation of Figure 1c it can be seen that the second (moveable) clamp jaw is held locked in the clamping position shown by means of a locking device 32 which comprises a lever 34 which is biased by means of a spring 36 against the beams 8, 10. Moving the lever 34 in the direction shown by the arrow A in figure 1c releases the locking action and allows the second clamp jaw 6 to be moved away (in direction A) from its clamping position on the reservoir inlet neck 24.

Figure 1c also shows the cap element 20 driven down by clockwise rotation of the threaded rod 18 through the cap element support 16 so that the conical sealing surface 22 is in sealing contact 38 with the inlet neck of the fluid reservoir. In this position the pressurized fluid, for example brake fluid, may be passed through a bore 40 in the rod 18 and thence through a corresponding bore 42 in the cap element 20. After a fluid replacement or bleeding operation the cap element 20 can be raised by simply rotating the rod 18 counter clockwise, and the removal of the cap device 1 from the reservoir 26 completed by releasing the clamp device 2 as described above.

Figure 2 shows in a cross sectional front elevation the same universal cap device as that of Figures 1 but clamped to a much wider (larger diameter) reservoir neck 24. In order to accommodate this the second jaw 6 of the clamp device 2 is moved further along the beams (8, 10) away from the first, fixed jaw 4 to a new clamping position. The carriage 14 has also been moved further from the first fixed jaw 4 to centre the cap element with respect to the reservoir neck. The rod 18 has then been screwed further through the cap element support 16 to drive the cap element 20 further down so that the conical sealing surface 22 seals correctly to the reservoir neck 24.

The universal cap device is particularly suitable for use with the Alba Diagnostics^{™} range of brake bleeder systems.

## Claims

1. A universal cap device (1) for a reservoir vessel (26), which vessel has a neck portion (24) with a distal end portion (24) defining an inlet opening having a diameter within a predetermined range of different diameters, said cap device providing in use thereof, a temporary capping of said inlet opening and comprising:
a clamp device (2) having opposed, first and second, jaws (4,6), for clamping engagement with a said neck portion (24), said jaws being mounted on at least one beam (8,10), at least one of said jaws (6) being movable relative to the other (4) along said at least one beam (8,10),
said at least one beam mounting a carriage (14) movable along said beam; said carriage (14) mounting a cap element support (16), which supports a downwardly projecting cap element (20), via a drive device (17,18) for controlled downward displacement of said cap element (20) into sealing engagement (38) with said inlet opening in use of the cap device (1), said cap element (20) having a sealing surface (22) formed and arranged so that said cap element (20) can sealingly engage the inlet openings of various different reservoirs with different sizes of inlet opening.

2. A universal cap device according to claim 1 wherein the clamp device (2) comprises a screw device for controlled movement of said at least one movable jaw, or a ratchet advance drive which retains the moveable jaw once it has been moved into a clamping position, or a movable jaw (6) which is freely slideable on said at least one beam and is then retained in a clamping position by a locking device (32).

3. A universal cap device according to claim 2 wherein the clamping device comprises a moveable jaw which is freely slideable on said at least one beam and a quick release locking device (32) comprising a lever (34) which is biased to grip the said at least one beam (8,10) by the action of a resilient biasing member (36).

4. A universal cap device according to any preceding claim wherein the cap element (20) has a resilient sealing surface (22).

5. A universal cap device according to any preceding claim wherein the cap element sealing surface (22) is a substantially flat sealing surface which engages the end face of the inlet opening, or has a male cross-sectional profile of progressively increasing diameter, whereby the sealing surface engages the inner edge of the inlet opening, or a female cross-sectional profile of progressively increasing diameter, whereby the sealing surface engages the outer edge of the inlet opening.

6. A universal cap device according to any preceding claim wherein the cap element is impermeable in order to close off the inlet opening.

7. A universal cap device according to any one of claims 1 to 6 wherein the cap element (20) is provided with at least one passage therethrough (42) connectable to a conduit for fluid communication between the vessel and the exterior.

8. A universal cap device according to any preceding claim wherein the drive device comprises a screw (18) passing through a threaded hole formed in a nut (17) attached to the carriage (14) of the cap element unit (1), with the cap element (20) attached to the end of the screw distal from the carriage.

9. A universal cap device according to claim 8 wherein the cap element (20) has a passage therethrough (42) for supplying the pressurized fluid to a fluid reservoir and the passage also passes through the screw (18).

10. A universal cap device according to any preceding claim wherein the beam (8, 10) passes through the body of the carriage (14), securing the carriage (14) to the beam (8,10).

11. A universal cap device according to any preceding claim wherein the carriage is provided with rollers or wheels which engage with the beam for smoother movement.

12. A universal cap device according to any preceding claim wherein the carriage is supplied with a locking means to lock it to the beam of the clamp device at a selected position.

13. A universal cap device according to any preceding claim wherein one jaw (4) is fixed at one end of the beam and the second jaw (6) is moveable along the beam (8,10).

14. A universal cap device according to any preceding claim wherein the clamp device (1) comprises two spaced apart and parallel beams (8,10).

15. A universal cap device according to claim 14 wherein the first clamp jaw (4) is fixed at one end of both of the beams (8,10) and the second moveable clamp jaw (6) is also mounted to both beams (8,10).

16. A universal cap device according to any preceding claim wherein each clamp jaw reservoir neck engagement portion has a pair of projections (28,30), with each projection in a pair being in a side-by-side spaced apart relationship.

## Patentansprüche

1. Universelle Verschlussvorrichtung (1) für ein Vorratsgefäß (26), wobei das Gefäß einen Halsabschnitt (24) mit einem distalen Endabschnitt (24) aufweist, der eine Einlassöffnung mit einem Durchmesser innerhalb eines vorbestimmten Bereichs von verschiedenen Durchmessern definiert, wobei die Verschlussvorrichtung beim Gebrauch einen vorübergehenden Verschluss der Einlassöffnung bereitstellt und Folgendes umfasst:
eine Klemmvorrichtung (2) mit gegenüberliegenden ersten und zweiten Backen (4, 6) für einen Klemmeingriff mit dem Halsabschnitt (24), wobei die Backen auf wenigstens einem Träger (8, 10) montiert sind, wobei wenigstens eine der Backen (6) relativ zu der anderen (4) entlang dem wenigstens einen Träger (8, 10) beweglich ist,
wobei auf wenigstens einem Träger ein Schlitten (14) entlang dem Träger beweglich montiert ist; wobei auf dem Schlitten (14) ein Verschlusselementträger (16), der ein nach unten vorstehendes Verschlusselement (20) trägt, über eine Antriebsvorrichtung (17, 18) für eine geregelte Abwärtsverschiebung des Verschlusselements (20) in einen Dichtungseingriff (38) mit der Einlassöffnung beim Gebrauch der Verschlussvorrichtung (1) montiert ist, wobei das Verschlusselement (20) eine Dichtungsfläche (22) aufweist, die so ausgebildet und ausgestaltet ist, dass das Verschlusselement (20) dichtend in die Einlassöffnungen mehrerer verschiedener Gefäße mit unterschiedlichen Einlassöffnungsgrößen eingreifen kann.

2. Universelle Verschlussvorrichtung nach Anspruch 1, wobei die Klemmvorrichtung (2) eine Schraubvorrichtung für eine geregelte Bewegung der wenigstens einen beweglichen Backe oder einen Ratschenvortrieb umfasst, der die bewegliche Backe festhält, wenn diese in eine Klemmposition bewegt wurde, oder eine bewegliche Backe (6), die frei auf dem wenigstens einen Träger verschiebbar ist und dann von einer Verriegelungsvorrichtung (32) in einer Klemmposition gehalten wird.

3. Universelle Verschlussvorrichtung nach Anspruch 2, wobei die Klemmvorrichtung eine bewegliche Backe, die auf dem wenigstens einen Träger frei verschiebbar ist, und eine Schnelllöseverriegelungsvorrichtung (32) mit einem Hebel (34) umfasst, der so vorgespannt ist, dass er den wenigstens einen Träger (8, 10) durch die Wirkung eines elastischen Vorspannelements (36) ergreift.

4. Universelle Verschlussvorrichtung nach einem der vorherigen Ansprüche, wobei das Verschlusselement (20) eine elastische Dichtungsfläche (22) aufweist.

5. Universelle Verschlussvorrichtung nach einem der vorherigen Ansprüche, wobei die Verschlusselementdichtungsfläche (22) eine im Wesentlichen flache Dichtungsfläche ist, die in die Endfläche der Einlassöffnung eingreift, oder ein Steckquerschnittsprofil mit progressiv zunehmendem Durchmesser, so dass die Dichtungsfläche in den inneren Rand der Einlassöffnung eingreift, oder ein Aufnahmequerschnittsprofil mit progressiv zunehmendem Durchmesser hat, so dass die Dichtungsfläche in den Außenrand der Einlassöffnung eingreift.

6. Universelle Verschlussvorrichtung nach einem der vorherigen Ansprüche, wobei das Verschlusselement undurchlässig ist, um die Einlassöffnung abzuschließen.

7. Universelle Verschlussvorrichtung nach einem der Ansprüche 1 bis 6, wobei das Verschlusselement (20) mit wenigstens einem Durchgang (42) versehen ist, der mit einem Kanal für eine Fluidverbindung zwischen dem Gefäß und der Außenseite verbunden werden kann.

8. Universelle Verschlussvorrichtung nach einem der vorherigen Ansprüche, wobei die Antriebsvorrichtung eine Schraube (18) umfasst, die durch ein Gewindeloch passiert, das in einer Mutter (17) ausgebildet ist, die am Schlitten (14) der Verschlusselementeinheit (1) angebracht ist, wobei das Verschlusselement (20) am Ende der Schraube distal von dem Schlitten angebracht ist.

9. Universelle Verschlussvorrichtung nach Anspruch 8, wobei durch das Verschlusselement (20) ein Durchgang (42) zum Zuführen des Druckfluids zu einem Fluidgefäß verläuft und der Durchgang auch durch die Schraube (18) verläuft.

10. Universelle Verschlussvorrichtung nach einem der vorherigen Ansprüche, wobei der Träger (8, 10) durch den Körper des Schlittens (14) verläuft und den Schlitten (14) am Träger (8, 10) befestigt.

11. Universelle Verschlussvorrichtung nach einem der vorherigen Ansprüche, wobei der Schlitten mit Rollen oder Rädern versehen ist, die für eine glattere Bewegung in den Träger eingreifen.

12. Universelle Verschlussvorrichtung nach einem der vorherigen Ansprüche, wobei der Schlitten mit einem Verriegelungsmittel versehen ist, um ihn am Träger der Klemmvorrichtung in einer gewählten Position zu verriegeln.

13. Universelle Verschlussvorrichtung nach einem der vorherigen Ansprüche, wobei eine Backe (4) an einem Ende des Trägers befestigt ist und die zweite Backe (6) entlang dem Träger (8, 10) beweglich ist.

14. Universelle Verschlussvorrichtung nach einem der vorherigen Ansprüche, wobei die Klemmvorrichtung (1) zwei beabstandete und parallele Träger (8, 10) umfasst.

15. Universelle Verschlussvorrichtung nach Anspruch 14, wobei die erste Klemmbacke (4) an einem Ende von beiden Trägem (8, 10) befestigt ist und die zweite bewegliche Klemmbacke (6) ebenso an beiden Trägem (8, 10) montiert ist.

16. Universelle Verschlussvorrichtung nach einem der vorherigen Ansprüche, wobei jeder Klemmbacken-Gefäßhalseingriffsabschnitt ein Paar Vorsprünge (28, 30) umfasst, wobei jeder Vorsprung in einem Paar in einer nebeneinander beabstandeten Beziehung ist.

## Revendications

1. Dispositif de bouchon universel (1) pour un récipient de réservoir (26), le récipient comportant une partie de col (24) avec une partie d'extrémité distale (24), définissant une ouverture d'entrée ayant un diamètre compris dans un intervalle prédéterminé de diamètres différents, ledit dispositif de bouchon assurant, lors de son utilisation, une fermeture temporaire de ladite ouverture d'entrée, et comprenant :
un dispositif de serrage (2), comportant des première et deuxième mâchoires opposées (4, 6) en vue d'un engagement par serrage dans ladite partie de col (24), lesdites mâchoires étant montées sur au moins un montant (8, 10), au moins une desdites mâchoires (6) pouvant être déplacée par rapport à l'autre (4) le long dudit au moins un montant (8, 10) ;
ledit au moins un montant comportant un chariot (14) qui y est monté, pouvant se déplacer le long dudit montant, ledit chariot (14) comportant un support de l'élément de bouchon (16) qui y est monté, supportant un élément de bouchon (20) débordant vers le bas, par l'intermédiaire d'un dispositif d'entraînement (17, 18), pour assurer un déplacement vers le bas contrôlé dudit élément de bouchon (20), engagé de manière étanche (38) dans ladite ouverture d'entrée lors de l'utilisation du dispositif de bouchon (1), ledit élément de bouchon (20) comportant une surface d'étanchéité (22) formée et agencée de sorte que ledit élément de bouchon (20) peut s'engager de manière étanche dans les ouvertures d'entrée de différents réservoirs ayant des tailles différentes de l'ouverture d'entrée.

2. Dispositif de bouchon universel selon la revendication 1, dans lequel le dispositif de serrage (2) comprend un dispositif de vis pour assurer un déplacement contrôlé de ladite au moins une mâchoire mobile, et un entraînement d'avancement à cliquet retenant la mâchoire mobile après son déplacement dans la position de serrage, ou une mâchoire mobile (6) pouvant glisser librement sur ledit au moins un montant et étant ensuite retenue dans une position de serrage par un dispositif de verrouillage (32).

3. Dispositif de bouchon universel selon la revendication 2, dans lequel le dispositif de serrage comprend une mâchoire mobile, pouvant glisser librement sur ledit au moins un montant, et un dispositif de verrouillage à libération rapide (32), comprenant un levier (34) poussé de sorte à saisir ledit au moins un montant (8, 10) par l'intermédiaire d'un élément poussoir élastique (36).

4. Dispositif de bouchon universel selon l'une quelconque des revendications précédentes, dans lequel l'élément de bouchon (20) comporte une surface d'étanchéité élastique (22).

5. Dispositif de bouchon universel selon l'une quelconque des revendications précédentes, dans lequel la surface d'étanchéité de l'élément de bouchon (22) est une surface d'étanchéité pratiquement plate, s'engageant dans la face d'extrémité de l'ouverture d'entrée, ou ayant un profil de section transversale mâle à diamètre progressivement accru, la surface d'étanchéité s'engageant ainsi dans le bord interne de l'ouverture d'entrée, ou un profil de section transversale femelle à diamètre progressivement accru, la surface d'étanchéité s'engageant ainsi dans le bord externe de l'ouverture d'entrée.

6. Dispositif de bouchon universel selon l'une quelconque des revendications précédentes, dans lequel l'élément de bouchon est imperméable pour assurer la fermeture de l'ouverture d'entrée.

7. Dispositif de bouchon universel selon l'une quelconque des revendications 1 à 6, dans lequel l'élément de bouchon (20) comporte au moins un passage (42) le traversant, pouvant être connecté à un conduit pour établir une communication de fluide entre le récipient et l'extérieur.

8. Dispositif de bouchon universel selon l'une quelconque des revendications précédentes, dans lequel le dispositif d'entraînement comprend une vis (18) traversant un trou fileté formé dans un écrou (17) fixé sur le chariot (14) de l'unité d'élément de bouchon (1), l'élément de bouchon (20) étant fixé sur l'extrémité de la vis de manière distale par rapport au chariot.

9. Dispositif de bouchon universel selon la revendication 8, dans lequel l'élément de bouchon (20) comporte un passage (42) le traversant, pour amener le fluide sous pression vers un réservoir de fluide, le passage traversant également la vis (18).

10. Dispositif de bouchon universel selon l'une quelconque des revendications précédentes, dans lequel le montant (8, 10) passe à travers le corps du chariot (14), fixant le chariot (14) sur le montant (8, 10).

11. Dispositif de bouchon universel selon l'une quelconque des revendications précédentes, dans lequel le chariot comporte des rouleaux ou des roues s'engageant dans le montant pour assurer un déplacement plus lisse.

12. Dispositif de bouchon universel selon l'une quelconque des revendications précédentes, dans lequel le chariot comporte un moyen de verrouillage pour le verrouiller sur le montant du dispositif de serrage au niveau d'une position sélectionnée.

13. Dispositif de bouchon universel selon l'une quelconque des revendications précédentes, dans lequel une mâchoire (4) est fixée au niveau d'une extrémité du montant, la deuxième mâchoire (6) pouvant se déplacer le long du montant (8, 10).

14. Dispositif de bouchon universel selon l'une quelconque des revendications précédentes, dans lequel le dispositif de serrage (1) comprend deux montants parallèles espacés (8, 10).

15. Dispositif de bouchon universel selon la revendication 14, dans lequel la première mâchoire de serrage (4) est fixée au niveau d'une extrémité des deux montants (8, 10), la deuxième mâchoire de serrage mobile (6) étant également montée sur les deux montants (8, 10).

16. Dispositif de bouchon universel selon l'une quelconque des revendications précédents, dans lequel chaque partie d'engagement du col du réservoir à mâchoire de serrage comporte une paire de saillies (28, 30), chaque saillie dans une paire étant agencée dans une relation juxtaposée.
